# EUROPÄISCHE PATENTANMELDUNG

(11) **EP 4 159 644 A1**
(43) Veröffentlichungstag der Anmeldung: **05.04.2023**
(21) Anmeldenummer: 22198585.6
(22) Anmeldetag: 29.09.2022
(51) Int. Cl.: B65G 1/137, B65G 43/00, B07C 7/00, B65G 47/52, B07C 5/36, B07C 5/38

(54) **VERFAHREN UND VORRICHTUNG ZUM ÜBERGEBEN VON OBJEKTEN ZWISCHEN ZWEI FÖRDERVORRICHTUNGEN SOWIE EIN FÖRDERSYSTEM**

(30) Priorität: 29.09.2021 CH 0703292021
(71) Anmelder: FERAG AG, 8340 Hinwil (CH)
(72) Erfinder: BOSSHARD, Hans, 8484 Weisslingen (CH)
(74) Vertreter: Frei Patent Attorneys

(57) **Zusammenfassung**

Vorrichtung und Verfahren zum Fördern und Abgeben von Objekten (10a-10e) von einem Zuförderer (52) über einen Abgabebereich an einen Wegförderer (101), wobei der Zuförderer (52) ein Förderorgan (53) enthält, welches entlang einer Förderstrecke einen durchgehenden Auflagebereich zum aufliegenden und hintereinander Fördern von Objekten (10a-10e) entlang der Förderstrecke ausbildet, und der Zuförderer (52) einen in Förderrichtung (F) vor dem Abgabebereich angeordneten Eingreifbereich (B) zum Transferieren von Objekten (10a-10e) auf das bzw. weg vom Förderorgan (3, 53) ausbildet, wobei im Eingreifbereich (B) eine optische Anzeigeeinheit (54) mit mindestens einem parallel zur Förderrichtung (F) ausgerichteten, ansteuerbaren Lichterband (55) angeordnet ist, wobei mittels einer Steuerungseinheit (57) Leuchtsignale (56a-56c) am Lichterband (55) erzeugt werden, welche synchron mit dem Förderorgan (53) in Förderrichtung (F) mitbewegt werden, wobei mittels der Leuchtsignale (56a-56c) virtuelle Abteile (58a-58c) zum Transferieren von Objekten (10a-10e) auf das bzw. weg vom Förderorgan (53) visualisiert werden.

## Beschreibung

Die Erfindung liegt auf dem Gebiet der Fördertechnik und betrifft ein Verfahren zum Übergeben von Objekten von einem Zuförderer an einen Wegförderer gemäss dem Oberbegriff des Anspruchs 1 sowie ein Fördersystem zur Ausführung des Verfahrens.

Durch den zunehmenden Online-Handel werden in Umschlagzentren immer grössere Mengen von Fördergütern, meist in Form von Paketen, verarbeitet. Die grossen Mengen an Fördergütern sind eine grosse Herausforderung für die Umschlagzentren. So sollen die Fördergüter in den Umschlagzentren möglichst speditiv verarbeitet werden, damit diese ihren Empfänger schnellstmöglich erreichen.

In den Umschlagzentren werden die eintreffenden Fördergüter in Sortier- und Verteilsysteme eingespiesen. Hierzu werden die eintreffenden Fördergüter auf die Förderfläche eines Bereitstellungsförderers aufgelegt, welcher die Fördergüter einem Sorter zufördert und diesem übergibt.

Der Sorter kann beispielsweise als so genannter Kippschalenförderer ausgebildet sein, welcher zum Abgeben von Fördergütern kippbare Förderschalen aufweist. Mittels des Kippschalenförderers werden die Fördergüter in Kippschalen an Abgabestellen vorbei gefördert. Sobald das Fördergut die richtige Abgabestelle erreicht hat, wird die Kippschale über einen Kippmechanismus in eine Schrägstellung versetzt und die Fördergüter gleiten seitlich von der Förderschale zu einer Übernahmeeinrichtung hin ab.

Grundsätzlich werden die Verarbeitungskapazitäten von Bereitstellungsförderer und Sorter durch entsprechende Steuerung der Fördergeschwindigkeiten aufeinander abgestimmt. Es kann dennoch vorkommen, dass der Bereitstellungsförderer temporär mehr Fördergüter zufördert als vom Sorter übernommen werden können. Dies ist beispielsweise der Fall, wenn der Sorter vorübergehend mit reduzierter Geschwindigkeit betrieben werden muss oder im Abgabebereich bereits besetzte Förderplätze oder defekte Förderschalen aufweist, was die Übernahme von Fördergütern ausschliesst. Da in der Regel jedes Fördergut eine Förderschale des Sorters beansprucht, kann auch eine Serie von kleinen, dicht aufeinander folgenden Fördergütern die Förderkapazitäten des Sorters übertreffen. Daher sollte die Anzahl der Fördergüter pro Förderabschnitt des Bereitstellungsförderers auf die Förderkapazität des Wegförderers abgestimmt sein.

Andernfalls müssen überzählige Fördergüter, welche nicht an den Sorter abgegeben werden können, wieder zurückgeführt und dem Sorter von Neuem zugeführt werden. Dies ist ineffizient und führt zu Mehraufwand.

Die Fördergüter werden in der Regel von Bedienpersonal von Hand, d.h. manuell auf die Förderfläche des Bereitstellungsförderers aufgelegt. Das in der Regel unter Zeitdruck arbeitende Bedienpersonal hat weder die Zeit noch das notwendige Wissen, um die Fördergüter durch eigene Abschätzung in einer der Förderkapazität des Sorters adäquaten Anordnung auf dem Bereitstellungsförderer abzulegen.

Es ist nun eine Aufgabe der vorliegenden Erfindung, ein Verfahren und ein dazugehöriges Fördersystem zum Übergeben von Fördergütern von einem Zuförderer, wie z. B. Bereitstellungsförderer, an einen Wegförderer, wie z. B. Sorter, vorzuschlagen, welche ermöglichen, die Fördergüter unter optimaler Ausnutzung der Förderkapazität des Wegförderers effizient vom Zuförderer an den Wegförderer zu übergeben. Das Verfahren und das dazugehörige Fördersystem sollen insbesondere dazu ausgelegt sein, den Rücklauf an nicht übergebenen Fördergütern des Zuförderers möglichst klein zu halten bzw. ganz zu vermeiden.

Es ist ferner eine Aufgabe der vorliegenden Erfindung, die Förderplätze des Wegförderers möglichst lückenlos mit Fördergütern des Zuförderers zu besetzen.

Wenigstens eine Aufgabe wird mit den Merkmalen der unabhängigen Ansprüche 1 und 14 gelöst. Die abhängigen Ansprüche sowie die Beschreibung und die Figuren beinhalten besondere Ausführungsformen und Weiterbildungen der Erfindung.

Die Erfindung betrifft also ein Verfahren zum Fördern und Abgeben bzw. Übergeben von Objekten von einem Zuförderer über einen Abgabebereich bzw. Übergabebereich an einen Wegförderer, wobei der Zuförderer ein Förderorgan enthält, welches entlang einer Förderstrecke einen durchgehenden Auflagebereich zum aufliegenden und hintereinander Fördern von Objekten entlang der Förderstrecke ausbildet, und der Zuförderer einen in Förderrichtung vor dem Abgabebereich bzw. Übergabebereich angeordneten Eingreifbereich zum Transferieren von Objekten auf das bzw. weg vom Förderorgan ausbildet. Anstelle von Bereich kann auch von Zone gesprochen werden.

Die Erfindung zeichnet sich dadurch aus, dass im Eingreifbereich eine optische Anzeigeeinheit mit mindestens einem parallel zur Förderrichtung ausgerichteten, ansteuerbaren Lichterband angeordnet ist, wobei mittels einer Steuerungseinheit Leuchtsignale am Lichterband erzeugt werden, welche synchron mit dem Förderorgan in Förderrichtung mitbewegt werden, wobei mittels der Leuchtsignale virtuelle Abteile zum Transferieren von Objekten auf das bzw. weg vom Förderorgan visualisiert werden.

Die virtuellen Abteile, auch virtuelle Fächer oder virtuelle Förderabteile bzw. Förderfächer genannt, bewegen sich entsprechend ebenfalls synchron mit dem Förderorgan in Förderrichtung mit.

Die Leuchtsignale und entsprechend die virtuellen Abteile bewegen sich insbesondere im Eingreifbereich in Fördergeschwindigkeit synchron mit dem Förderorgan bzw. den Objekten mit. Die Länge des Eingreifbereichs entlang der Förderstrecke kann mehrere Meter betragen.

Die dem Förderorgan aufliegenden Objekte werden im Anschluss an den Eingreifbereich entlang einer Zuförderstrecke in den Abgabebereich gefördert, in welchem die Objekte an den Wegförderer abgeben bzw. übergeben werden.

Gemäss einer ersten Ausführungsvariante ist es das Ziel, dem Bedienpersonal eine optische Auflagehilfe zur Verfügung zu stellen, welche diesem anzeigt, an welcher Stelle bzw. in welchem Bereich des Förderorgans das jeweilige Objekt auf dem Förderorgan abzulegen bzw. zu platzieren ist. Dadurch soll verhindert werden, dass die Objekte unter Berücksichtigung einer optimalen Ausnützung der Förderkapazität des Wegförderers in Förderrichtung nicht zu nahe hintereinander oder zu weit auseinander angeordnet sind.

Gemäss dieser Ausführungsvariante entspricht der Eingreifbereich einem Beschickungsbereich zum Auflegen von Objekten auf das Förderorgan, wobei mittels der Leuchtsignale virtuelle Abteile zum Auflegen bzw. Ablegen von Objekten auf das Förderorgan visualisiert bzw. markiert werden.

Die virtuellen Abteile werden insbesondere so ausgebildet, dass die im Beschickungsbereich in die virtuellen Abteile auf dem Zuförderer abgelegten Objekte zwecks Abgabe der Objekte im Abgabebereich phasengerecht zu verfügbaren Förderplätzen des Wegförderers angeordnet sind.

Das Bedienpersonal legt nun die Objekte in die virtuellen Abteile und somit in optimalen Abständen zueinander ab. Dadurch kann verhindert werden, dass die Objekte durch das Bedienpersonal in Förderrichtung zu dicht hintereinander oder zu weit auseinander auf dem Förderorgan abgelegt werden. Ersteres hat zur Folge, dass im Abgabebereich zu wenig Förderplätze beim Wegförderer zur Verfügung stehen und überzählige Objekte im Abgabebereich entnommen bzw. zurückgeführt werden müssen. Zweiteres bewirkt, dass nicht sämtliche Förderplätze beim Wegförderer mit Objekten belegt werden können und auf dem Wegförderer Förderlücken entstehen. Folglich wird nicht die volle Förderkapazität des Wegförderers genutzt.

Dank den virtuellen Abteilen bzw. der dazugehörigen Leuchtsignale braucht sich das Bedienpersonal nicht selbst um ein optimales Belegungsmuster des Förderorgans mit Objekten zu befassen, sondern kann das Ablegen der Objekte ohne Zusatzaufwand einfach gemäss den durch Leuchtsignale angezeigten virtuellen Abteile vornehmen.

Phasengerecht bedeutet im Rahmen dieser Erfindung insbesondere, dass die im Beschickungsbereich in die virtuellen Abteile abgelegten Objekte im Abgabebereich taktsynchron mit den Förderplätzen des Wegförderers zusammentreffen bzw. taktsynchron auf die Förderplätze des Wegförderers abgestimmt sind.

Gemäss einer zweiten Ausführungsvariante ist es das Ziel, dem Bedienpersonal eine optische Entnahmehilfe zur Verfügung zu stellen, welche diesem anzeigt, welche Objekte vor dem Abgabebereich vom Förderorgan zu entnehmen bzw. zu entfernen sind, damit die auf dem Förderorgan verbleibenden Objekte unter Berücksichtigung einer optimalen Ausnützung der Förderkapazität des Wegförderers in Förderrichtung nicht zu nahe hintereinander oder zu weit auseinander angeordnet sind.

Gemäss dieser Ausführungsvariante entspricht der Eingreifbereich einem Aussortierbereich zum Entfernen von Objekten vom Förderorgan, wobei mittels der durch Leuchtsignale visualisierten bzw. markierten, virtuellen Abteile einzelne Objekte auf dem Förderorgan, welche vom Förderorgan zu entfernen sind, markiert werden.

Die virtuellen Abteile werden insbesondere so ausgebildet, dass die im Aussortierbereich in den virtuellen Abteilen auf dem Zuförderer angeordneten Objekte zwecks Abgabe der Objekte im Abgabebereich phasengerecht zu verfügbaren Förderplätzen des Wegförderers angeordnet sind.

Die Leuchtsignale der virtuellen Abteile mit überzähligen und daher zu entfernenden Objekten unterscheiden sich insbesondere von Leuchtsignalen der virtuellen Abteile mit nicht zu entfernenden Objekten.

Die Leuchtsignale der virtuellen Abteile mit zu entfernenden Objekten stellen eine Statusanzeige dar. Sie sind insbesondere so ausgelegt, dass diese die Aufmerksamkeit des Bedienpersonals auf sich ziehen. So können die Leuchtsignale in einer Warnfarbe, wie rot, leuchten. Die Leuchtsignale können auch durch ein Blinken oder durch grosse Helligkeit auffallen. Eine Kombination mehrerer dieser Merkmale ist möglich.

Grundsätzlich ist es auch denkbar, dass nur zu den zu entfernenden Objekten ein durch ein Leuchtsignal angezeigtes virtuelles Abteil ausgebildet wird.

Bei den vom Förderorgan zu entfernenden Objekten handelt es sich insbesondere um überzählige Objekte, welche vom Bedienpersonal vom Förderorgan entfernt werden, so dass die übrigen, d.h. verbleibenden Objekte zwecks Abgabe der Objekte im nachfolgenden Abgabebereich phasengerecht zu verfügbaren Förderplätzen des Wegförderers angeordnet sind.

Dank der Markierung von überzähligen Objekten mittels virtueller Abteile bzw. mittels der dazugehörigen Leuchtsignale kann sichergestellt werden, dass diese nicht im Abgabebereich dem Förderstrom entnommen bzw. zurückgeführt werden müssen.

Optional bzw. alternativ können Objekte zum Entfernen vom Förderorgan mittels der oben beschriebenen virtuellen Abteile markiert werden, welche im Rahmen eines Kommissionierungsvorganges aufgrund einer nachfolgenden Weiterverarbeitung als Zustelleinheit vom Förderorgan entnommen werden müssen.

Die Leuchtsignale können sich grundsätzlich durch ein konstantes Licht auszeichnen. Die Leuchtsignale können sich alternative auch durch ein blinkendes Licht auszeichnen. Die Leuchtsignale können sich zusätzlich oder alternativ durch die Farbe des Lichts auszeichnen, wie z. B. grün, rot oder weiss. Die Leuchtsignale können sich ferner zusätzlich oder alternativ durch die Helligkeit auszeichnen.

Die Leuchtsignale entsprechen gemäss beiden Ausführungsvarianten insbesondere jeweils Leuchtstreifen. Zur Ausbildung der Leuchtstreifen werden insbesondere die Leuchtmittel eines entsprechenden Segmentes des Lichterbandes von der Steuerungseinheit angesteuert.

Leuchtstreifen visualisieren dabei jeweils insbesondere die Längsausdehnung eines virtuellen Abteils in Förderrichtung.

Zusätzlich oder alternativ zu Leuchtstreifen der vorgenannten Art können Leuchtstreifen jeweils die Längsausdehnung der Zwischenräume zwischen den virtuellen Abteilen in Förderrichtung visualisieren. So lassen sich beispielsweise Abteile auch durch Leuchtstreifen visualisieren, welche die Zwischenräume zwischen den Abteilen visualisieren bzw. markieren.

Die, insbesondere mittels Zwischenräumen voneinander beabstanden, virtuellen Abteile, können aufeinanderfolgend bzw. unmittelbar aufeinander folgend ausgebildet werden.

Die virtuellen Abteile können eine identische Längenausdehnung aufweisen.

Die Längenausdehnung der z. B. visualisierten Zwischenräume zwischen jeweils zwei virtuellen Abteilen kann identisch sein. Die Längenausdehnung der Zwischenräume kann auch unterschiedlich sein.

Werden Leuchtstreifen der beiden vorgenannten Art in Kombination eingesetzt, so unterscheiden sich die Leuchtstreifen z. B. durch ihre Farbe, Helligkeit und/oder durch ihre Blinkfrequenz.

Mittels der optischen Anzeigeeinheit können insbesondere auch virtuelle Abteile von unterschiedlicher Längsausdehnung in Förderrichtung und/oder mit unterschiedlichem Abstand zueinander in Förderrichtung visualisiert werden.

Gemäss einer besonderen Weiterbildung der Erfindung, welche insbesondere im Zusammenhang mit der zweiten Ausführungsvariante Anwendung findet, entsprechen die Leuchtsignale insbesondere jeweils Leuchtstreifen, welche am Lichterband jeweils zwischen einer bzw. einem in Förderrichtung vordersten Objektkante bzw. Objektpunkt und einer bzw. einem in Förderrichtung hintersten Objektkante bzw. Objektpunkt ausgebildet werden.

Die Leuchtstreifen bilden insbesondere die Längsausdehnung des dazugehörigen Objektes auf dem Förderorgan nach.

So können Leuchtstreifen einer ersten Art die Längserstreckung des Objektes in Förderrichtung abbilden.

Die Leuchtstreifen können insbesondere zwischen einer bzw. einem in Förderrichtung vordersten Objektkante bzw. Objektpunkt und einer bzw. einem in Förderrichtung hintersten Objektkante bzw. Objektpunkt eines Objektes ausgebildet werden.

Das virtuelle Abteil entspricht dabei der Längserstreckung bzw. Längsausdehnung des sich in diesem virtuellen Abteil befindlichen Objektes auf dem Förderorgan.

Ferner können Leuchtstreifen einer zweiten Art die Längserstreckung bzw. Längsausdehnung des Zwischenraumes zwischen zwei Objekten in Förderrichtung abbilden.

Die Leuchtstreifen können insbesondere zwischen einer bzw. einem in Förderrichtung hintersten Objektkante bzw. Objektpunkt eines vorlaufenden Objektes und einer bzw. einem in Förderrichtung vordersten Objektkante bzw. Objektpunkt eines unmittelbar nachlaufenden Objektes ausgebildet werden.

Grundsätzlich können auch hier Leuchtstreifen erster und zweiter Art alternativ oder in Kombination eingesetzt werden. Werden Leuchtstreifen erster und zweiter Art in Kombination eingesetzt, so unterscheiden sich die Leuchtstreifen erster und zweiter Art, z. B. in Farbe, Helligkeit und/oder durch ihre Blinkfrequenz.

Das Lichterband ist insbesondere seitlich vom Förderorgan angeordnet. Es kann jeweils auf beiden Seiten des Förderorgans ein Lichterband angeordnet sein. Das Lichterband ist insbesondere seitlich, oberhalb der Auflage- bzw. Förderfläche des Förderorgans angeordnet.

Ferner ist es auch möglich, dass das Lichterband oberhalb des Förderorgans, das heisst über dem Förderbereich angeordnet ist.

Das Lichterband enthält insbesondere eine Mehrzahl von hintereinander entlang des Lichterbandes angeordnete Leuchtmittel. Die Leuchtmittel sind insbesondere durch die Steuerungseinheit individuell ansteuerbar. Das Lichterband ist insbesondere ein LED-Band mit Leuchtdioden als Leuchtmittel.

Die Steuerungseinheit bildet die virtuellen Abteile insbesondere in Abhängigkeit von der Fördergeschwindigkeit des Zuförderers und der Fördergeschwindigkeit bzw. der Förderkapazität (verfügbare Förderplätze pro Zeiteinheit) des Wegförderers aus.

So ist eine phasengerechte Anordnung der Objekte zu verfügbaren Förderplätzen des Wegförderers im Abgabebereich unter anderem nur durch die Berücksichtigung der Fördergeschwindigkeiten des Zuförderers und der Fördergeschwindigkeit bzw. der Förderkapazität des Wegförderers möglich.

Im Weiteren bildet die Steuerungseinheit die virtuellen Abteile insbesondere auch in Abhängigkeit von der kurzfristigen Verfügbarkeit von Förderplätzen am Wegförderer aus. Die kurzfristige Verfügbarkeit von Förderplätzen wird beispielsweise durch bereits mit Objekten besetzte oder durch nicht belegbare Förderplätze mitbestimmt. Nicht belegbare Förderplätze können z.B. durch defekte Fördereinheiten verursacht sein.

Die Steuerungseinheit kann die Fördergeschwindigkeit von Zu- und Wegförderer direkt von der Antriebssteuerung oder über entsprechende Sensormittel erhalten, welche typische Kennwerte, wie die Drehzahl von Antriebswellen, erfassen.

Das Förderorgan des Zuförderers wird während des regulären Förderbetriebes insbesondere kontinuierlich, und ganz besonders mit gleichbleibender Geschwindigkeit angetrieben. So kann das Förderorgan mit einer Geschwindigkeit von 0.5 bis 2 m/s angetrieben werden.

Der Wegförderer wird während des regulären Förderbetriebs ebenfalls insbesondere kontinuierlich, und ganz besonders mit gleichbleibender Geschwindigkeit angetrieben.

Die Förderplätze des Wegförderers werden insbesondere durch Fördereinheiten des Wegförderers ausgebildet.

Solche Fördereinheiten können z. B. Förderbehälter, wie Förderschalen, Fördertabletts, Fördertaschen, Förderkisten oder Förderkörbe, sein.

Das erfindungsgemässe Verfahren wird durch ein Fördersystem ausgeführt, welches einen Zuförderer mit einem Förderorgan und einen Wegförderer enthält. Das Förderorgan des Zuförderers bildet entlang einer Förderstrecke einen durchgehenden Auflagebereich zum aufliegenden und hintereinander Fördern von Objekten entlang der Förderstrecke aus. Die Objekte werden entsprechend in einem Förderstrom gefördert.

Das Fördersystem bildet ferner einen Abgabebereich zum Abgeben von Objekten vom Zuförderer an den Wegförderer aus. Der Zuförderer bildet ferner einen in Förderrichtung vor dem Abgabebereich angeordneten Eingreifbereich zum Transferieren von Objekten auf das bzw. weg vom Förderorgan aus.

Das Fördersystem zeichnet sich dadurch aus, dass im Eingreifbereich eine optische Anzeigeeinheit mit mindestens einem parallel zur Förderrichtung ausgerichteten, ansteuerbaren Lichterband angeordnet ist, wobei mittels einer Steuerungseinheit Leuchtsignale am Lichterband erzeugt werden können, welche synchron mit dem Förderorgan in Förderrichtung mitbewegbar sind, wobei mittels der Leuchtsignale virtuelle Abteile zum Transferieren von Objekten auf das bzw. weg vom Förderorgan visualisiert werden können.

Gemäss der ersten Ausführungsvariante ist der Eingreifbereich ein Beschickungsbereich zum Auflegen von Objekten auf das Förderorgan. Die Steuerungseinheit ist dabei so ausgelegt, dass mittels der Leuchtsignale virtuelle Abteile zum Auflegen von Objekten auf das Förderorgan visualisiert werden können.

Die virtuellen Abteile können mittels der Steuerungseinheit insbesondere so ausgebildet werden, dass die im Beschickungsbereich in die virtuellen Abteile auf dem Zuförderer abgelegten Objekte zwecks Abgabe der Objekte im Abgabebereich phasengerecht zu verfügbaren Förderplätzen des Wegförderers angeordnet sind.

Gemäss der zweiten Ausführungsvariante ist der Eingreifbereich ein Aussortierbereich zum Entfernen von Objekten vom Förderorgan. Die Steuerungseinheit ist dabei so ausgelegt, dass mittels der durch Leuchtsignale visualisierten, virtuellen Abteile überzählige Objekte auf dem Förderorgan, welche vom Förderorgan zu entfernen sind, markiert werden können, so dass die übrigen Objekte zwecks Abgabe der Objekte im Abgabebereich insbesondere phasengerecht zu verfügbaren Förderplätzen des Wegförderers angeordnet sind bzw. bleiben.

Zur Ermittlung der Längenausdehnung der Objekte und/oder der Längenausdehnung der Objektzwischenräume auf dem Förderorgan parallel zur Förderrichtung kann vor dem Aussortierbereich eine Sensoreinheit, wie z. B. Lichtschranke oder Kamera, vorgesehen sein.

Zur Ermittlung von einer oder mehreren der folgenden Informationen bzw. Messgrössen, wie:
- Position der Objekte;
- Längenausdehnung der Objekte auf dem Förderorgan parallel zur Förderrichtung;
- Position der Objektzwischenräume;
- Längenausdehnung der Objektzwischenräume auf dem Förderorgan parallel zur Förderrichtung,
kann in Förderrichtung vor dem Aussortierbereich eine Sensoreinheit, wie z. B. Lichtschranke oder Kamera, vorgesehen sein.

Mittels der Sensoreinheit kann insbesondere jeweils die Position der Objekte entlang der Förderstrecke erfasst bzw. ermittelt werden.

Mittels der Sensoreinheit kann insbesondere jeweils die Längsausdehnung der Objekte entlang der Förderstrecke zwischen einer vordersten Objektkante und einer hintersten Objektkante erfasst bzw. ermittelt werden.

Die Position bzw. die Längsausdehnung der Objekte wird insbesondere jeweils mit den virtuellen Abteilen abgeglichen, wobei überzählige Objekte, welche nicht in virtuelle Abteile passen, mittels Leuchtsignalen entsprechend markiert werden. Dies sind insbesondere jene Leuchtsignale, welche die virtuellen Fächer visualisieren, in welche die überzähligen Produkte ragen.

Die Sensoreinheit ist insbesondere zur jeweiligen Erfassung der in Förderrichtung vordersten Objektkanten bzw. Objektpunkte und der in Förderrichtung hintersten Objektkanten bzw. Objektpunkt der Objekte zwecks Ermittlung der Längenausdehnung der Objekte und/oder der Längenausdehnung der Objektzwischenräume auf dem Förderorgan entlang der Förderrichtung vorgesehen.

Der Zuförderer ist grundsätzlich insbesondere ein Bereitstellungsförderer zum Bereitstellen von Objekten an den Wegförderer.

Der Zuförderer kann ein Linearförderer sein. Linearförderer sind Förderer im Bereich der Zuführtechnik, die in erster Linie dem horizontalen Transport von Objekten unterschiedlicher Grösse dienen.

Das Förderorgan bildet insbesondere eine bahnförmige Förderfläche aus. Die Förderfläche ist in Förderrichtung insbesondere durchgehend ausgebildet. Die Förderfläche entspricht folglich der Auflagefläche für die Objekte.

Die Objekte liegen zur Förderung insbesondere lose, d.h. verbindungsfrei dem Förderorgan des Zuförderers auf.

Der Zuförderer kann ein Bandförderer sein. Das Förderorgan umfasst entsprechend ein Förderband.

Der Zuförderer kann auch ein Plattenförderer sein. Das Förderorgan umfasst entsprechend mehrere entlang der Förderstrecke miteinander verkettete und insbesondere einander überlappende Plattenelemente.

Der Zuförderer kann ferner auch ein Mattenkettenförderer sein. Das Förderorgan ist entsprechend eine Modulbandkette bzw. Mattenkette.

Das Förderorgan des Zuförderers ist insbesondere umlaufend, d.h. endlos geführt. Der Zuförderer bildet insbesondere eine geschlossene Förderstrecke aus.

Grundsätzlich kann des Förderorgan auch eine Rollenbahn mit einer Mehrzahl von in Förderrichtung hintereinander angeordneten, stationären, angetriebenen Rollen umfassen. In diesem Fall werden die Leuchtsignale nicht synchron mit dem Förderorgan sondern lediglich synchron mit den auf dem Förderorgan liegenden Objekten mitbewegt.

Der Wegförderer ist insbesondere ein Schalenförderer, wie Kippschalenförderer. Der Wegförderer kann auch ein Hängeförderer sind.

Das erfindungsgemässe Fördersystem ist insbesondere ein Sortiersystem zur gezielten Sortierung und Verteilung von Objekten.

Der Wegförderer ist insbesondere ein Sorter, wie zum Beispiel ein Kippschalensorter. Der Wegförderer führt insbesondere entlang einer Abgabezone bzw. -bereich mit einer Mehrzahl von in Förderrichtung hintereinander angeordneten Abgabestellen zur Abgabe und entsprechend Sortierung bzw. Verteilung von Objekten vorbei.

Der Sorter kann insbesondere zur Kommissionierung von Zustelleinheiten dienen.

Die Objekte, auch Fördergüter genannt, sind insbesondere Stückgüter. Die Objekte sind insbesondere Pakete. Die Objekte können auch Gepäckstücke sein. Die Objekte können auch mehrteilige Gebinde, in Form von Stapeln, Zusammenstellungen, Versandgruppen und dergleichen sein.

Die Objekte können auch Förderbehälter umfassen, welche verbindungsfrei dem Förderorgan aufliegen, und in welchen Fördergüter entlang der Zuführstrecke transportiert werden können.

Die vorliegende Erfindung findet insbesondere Einsatz in Umschlagzentren von Paketdiensten, in Distributionszentren, Kommissionieranlagen oder in Verteilanlagen für Gepäck.

Die vorliegende Erfindung findet insbesondere Anwendung im Zusammenhang mit Zuförderern, welche durch Bedienpersonal manuell mit Objekten beschickt werden, bzw. bei welchen die auf dem Förderorgan aufliegenden Objekte durch Bedienpersonal manuell geordnet werden.

Dank der Ausbildung von virtuellen Abteilen gemäss der ersten und zweiten Ausführungsvariante werden die Objekte im Abgabebereich phasengerecht zu den verfügbaren Förderplätzen des Wegförderers gefördert. Trotz einer phasengerechten Anordnung der Objekte auf dem Förderorgan entsteht für das Bedienpersonal weder ein Mehraufwand noch erfordert dies vom Bedienpersonal eine erhöhte Konzentration oder bestimmte Erfahrung bei der Ausübung ihrer Tätigkeit. Das Bedienpersonal kann sich beim Beschicken des Förderorgans mit Objekten bzw. beim Entfernen von Objekten ganz einfach an den visualisierten Abteilen orientieren.

Ferner lässt sich dank dem erfindungsgemässen Verfahren der Förderstrom von Objekten des Zuförderers sehr schnell und flexibel auf kurzfristig geänderte Förderkapazitäten des Wegförderers anpassen, z. B. wenn ein oder mehrere Förderplätze des Wegförderers ausfallen.

Das zum Förderorgan synchrone Mitbewegen der Leuchtsignale und entsprechend der virtuellen Abteile entlang der Eingreifstrecke bzw. des Eingreifbereichs lässt dem Bedienpersonal genügend Zeit zum Handeln. Das heisst, die vom Bedienpersonal benötigte Information zum Ablegen bzw. Entfernen eines Objektes bleibt dank der kontinuierlich durch den Eingreifbereich bewegten, virtuellen Abteile eine Weile, das heisst während des Aufenthaltes des Objektes im Eingreifbereich, erhalten. Die Länge des Eingreifbereichs entlang der Förderstrecke kann entsprechend z. B. einige Meter betragen.

Nachfolgend wird der Erfindungsgegenstand anhand von Ausführungsbeispielen, welche in den beiliegenden Figuren dargestellt sind näher erläutert. Es zeigen jeweils schematisch:
- Figur 1:: eine Draufsicht eines Zuförderers gemäss der ersten Ausführungsvariante;
- Figur 2:: eine Draufsicht des Zuförderers nach Figur 1 mit einer alternativen Visualisierung der Abteile;
- Figur 3a:: eine Draufsicht eines Zuförderers gemäss der zweiten Ausführungsvariante;
- Figur 3b:: eine Draufsicht des Zuförderers nach Figur 3a zu einem späteren Zeitpunkt;
- Figur 4a:: eine Seitenansicht eines weiteren Zuförderers gemäss der zweiten Ausführungsvariante;
- Figur 4b:: eine Draufsicht des Zuförderers nach Figur 4a.

Grundsätzlich sind in den Figuren gleiche Teile mit gleichen Bezugszeichen versehen.

Für das Verständnis der Erfindung sind gewisse Merkmale in den Figuren nicht dargestellt. Die nachfolgend beschriebenen Ausführungsbeispiele stehen lediglich beispielhaft für den Erfindungsgegenstand und haben keine beschränkende Wirkung.

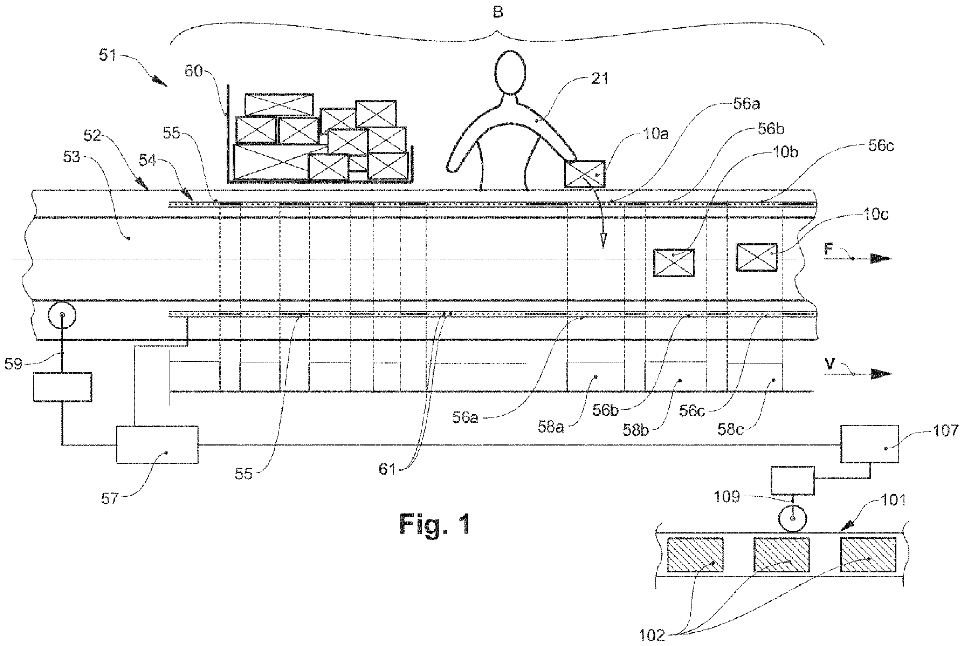

Die **Figur 1** zeigt einen Zuförderer 52 eines erfindungsgemässen Fördersystems 51 gemäss der ersten Ausführungsvariante. Der Zuförderer 52 enthält ein flächenförmiges Förderorgan 53, welches eine Förderfläche zum Auflegen von Objekten 10a-10c zur Förderung aufweist.

Der Zuförderer 52 bildet einen Beschickungsbereich B in Form einer Beschickungsstrecke aus, entlang welcher Objekte 10a-10c bzw. Fördergüter, insbesondere Pakete, durch Bedienpersonal 21 manuell aus Speicherbehältern 60 entnommen und fortlaufend auf die Förderfläche des sich mit der Fördergeschwindigkeit V in Förderrichtung F bewegenden Förderorgan 53 abgelegt werden.

Auf beiden Seiten des Förderorgan 53 ist jeweils ein Lichterband 55 einer optischen Anzeigeeinheit 54 angeordnet. Die Lichterbänder 55, welche über eine Steuerungseinheit 57 angesteuert werden, entsprechen LED-Bändern mit einer Mehrzahl von in Längsrichtung des Lichterbandes 55 hintereinander angeordneten Leuchtdioden 61.

An den Lichterbändern 55 werden mittels der Steuerungseinrichtung 57 Leuchtsignale 56a-56c in Form von Leuchtstreifen erzeugt, welche virtuelle Abteile 58a-58c zum Ablegen der Objekte 10a-10c visualisieren. Das heisst die Leuchtdioden 61 leuchten im Bereich der Leuchtstreifen 56a-56c in einer bestimmten Farbe, während die Leuchtdioden 61 ausserhalb der Leuchtstreifen 56a-56c nicht leuchten oder nur mit einer erheblich reduzierten Helligkeit leuchten oder in einer anderen Farbe leuchten, wobei der Begriff "Farbe" auch "weiss" miteinschliessen soll. Die Abschnitte ausserhalb der Leuchtstreifen 56a-56c markieren die Zwischenräume zwischen den Abteilen 58a-58c.

Die Leuchtstreifen 56a-56c bzw. die virtuellen Abteile 58a-58c werden synchron mit den auf dem Förderorgan 53 abgelegten Objekten 10a-10c mitbewegt. Dies erzeugt den visuellen Eindruck von Förderabteilen 58a-58c, welche mit Fördergeschwindigkeit V mitbewegt werden.

Das Fördersystem 51 enthält ferner einen Wegförderer 101 mit einer Mehrzahl von Fördereinheiten 102 in Form von Förderschalen. In Förderrichtung F nach dem Beschickungsbereich B wird entlang des Zuförderers 52 ein Abgabebereich (nicht gezeigt) ausgebildet, in welchem die Objekte 10a-10c an die Förderschalen 102 des Wegförderers 101 übergeben werden.

Die virtuellen Abteile 58a-58c werden bezüglich Längsausdehnung und gegenseitigem Abstand so ausgebildet, dass diese phasengerecht zu verfügbaren Förderschalen 102 des Wegförderers 101 angeordnet sind.

Das Bedienpersonal braucht nun lediglich die Objekte vom Speicherbehälter 60 in die virtuellen Abteile 58a-58c abzulegen. Dank der durch die virtuellen Abteile 58a-58c ausgebildeten Ablegehilfe kann das Bedienpersonal die Objekte schnell und zuverlässig ohne Effizienzeinbusse auf dem Förderorgan 53 ablegen, wobei dennoch eine phasengerechte Anordnung der Objekte auf dem Förderorgan garantiert ist.

Für eine phasengerechte Ausbildung der virtuellen Abteile 58a-58c berücksichtigt die Steuerungseinheit 57 die Fördergeschwindigkeit und somit die Förderkapazität des Wegförderers 101. Die Fördergeschwindigkeit des Wegförderers 101 kann z. B. über einen Drehzahlgeber 109 einer Antriebswelle des Wegförderers 101 ermittelt werden. Die Messwerte können z.B. über eine Steuerungseinheit 107 des Wegförderers 101 an die Steuerungseinheit 57 übermittelt werden. Ferner berücksichtigt die Steuerungseinheit 57 auch die Fördergeschwindigkeit des Zuförderers 52. Die Fördergeschwindigkeit des Zuförderers 52 kann z. B. über einen Drehzahlgeber 59 einer Antriebswelle des Zuförderers 52 ermittelt werden, dessen Messwerte an die Steuerungseinheit 57 übermittelt werden.

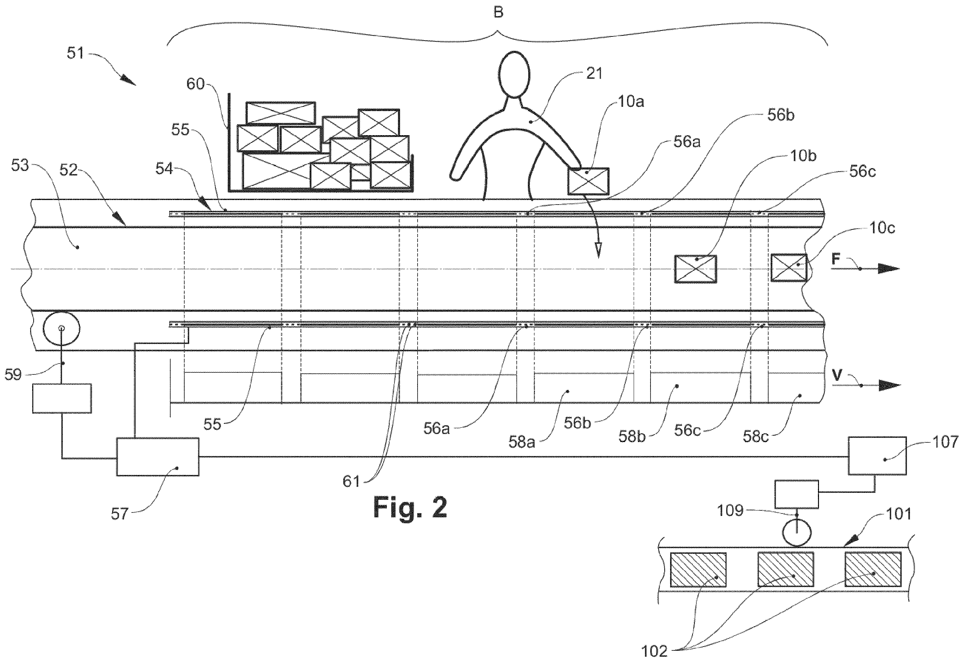

Die **Figur 2** zeigt dasselbe Fördersystem wie in Figur 1, jedoch mit dem Unterschied, dass die Leuchtsignale hier invertiert sind. Das heisst, die Leuchtstreifen 56a-56c markieren hier die Abschnitte ausserhalb der Abteile, also die Zwischenräume zwischen den Abteilen. In den Abschnitten des Lichterbandes zwischen den Leuchtstreifen 56a-56c, welche die Abteile markieren, leuchten die Leuchtdioden nicht oder nur mit einer erheblich reduzierten Helligkeit oder in einer anderen Farbe. Durch die mittels Leuchtstreifen 56a-56c markierten Abteilzwischenräume lassen sich nun ebenfalls die Abteile 58a-58c visualisieren.

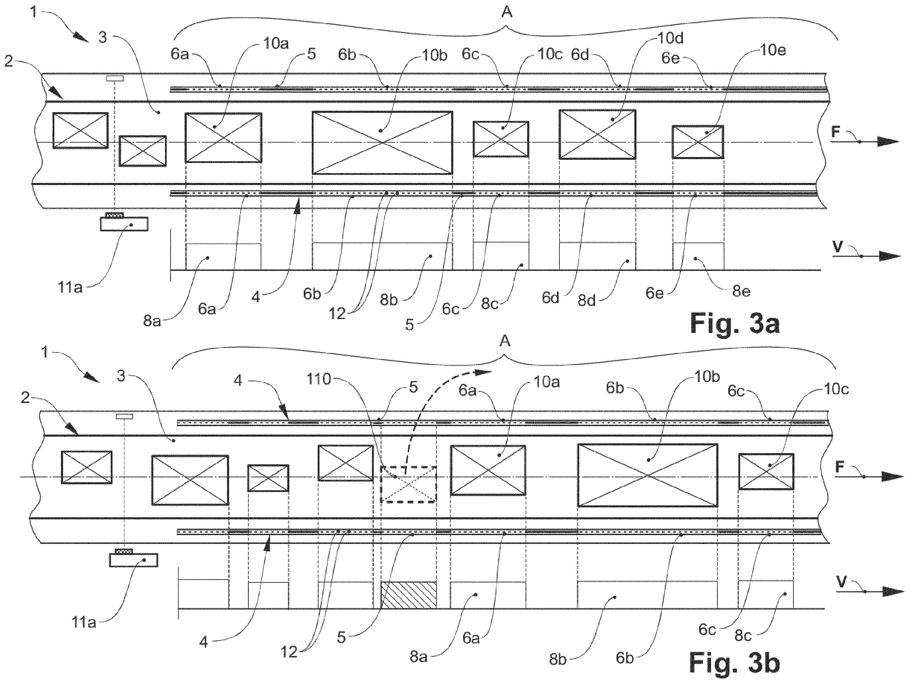

Die **Figuren 3a** und **3b** zeigen einen Zuförderer 2 eines erfindungsgemässen Fördersystems 1 gemäss der zweiten Ausführungsvariante. Der Zuförderer 2 enthält ein flächenförmiges Förderorgan 3, welches eine Förderfläche zum Auflegen von Objekten 10a-10e aufweist, auf welcher die Objekte 10a-10e gefördert werden.

Der Zuförderer 2 bildet einen Aussortierbereich A in Form einer Aussortierstrecke aus, entlang welcher einzelne, überzählige Objekte 10a-10e bzw. Fördergüter, insbesondere Pakete, durch Bedienpersonal 21 manuell vom Förderorgan 3 entnommen werden.

Auf beiden Seiten des Förderorgans 3 ist jeweils ein Lichterband 5 einer optischen Anzeigeeinheit 4 angeordnet. Die Lichterbänder 5, welche über eine Steuerungseinheit 7 angesteuert werden, entsprechen LED-Bändern mit einer Mehrzahl von in Längsrichtung des Lichterbandes 5 nebeneinander angeordneten Leuchtdioden 12.

An den Lichterbändern 5 werden mittels der Steuerungseinrichtung 7 Leuchtsignale 6a-6e in Form von Leuchtstreifen erzeugt, welche virtuelle Abteile zu den darin befindlichen Objekte 10a-10e visualisieren. Das heisst die Leuchtdioden 12 leuchten im Bereich der Leuchtstreifen 6a-6e, während die Leuchtdioden 12 ausserhalb der Leuchtstreifen 6a-6e nicht leuchten oder nur mit einer erheblich reduzierten Helligkeit leuchten oder in einer anderen Farbe leuchten. Die Abschnitte ausserhalb der Leuchtstreifen 6a-6e markieren die Zwischenräume zwischen den virtuellen Abteilen 8a-8e.

Die Leuchtstreifen 6a-6e bzw. die virtuellen Abteile 8a-8e werden synchron mit den auf dem Förderorgan 53 abgelegten Objekten 10a-10e mitbewegt. Dies erzeugt den visuellen Eindruck von Förderabteilen, welche mit der Fördergeschwindigkeit V mitbewegt werden.

Das Fördersystem 1 enthält ferner einen Wegförderer 101 mit einer Mehrzahl von Fördereinheiten 102 in Form von Förderschalen. In Förderrichtung F nach dem Aussortierbereich A wird entlang des Zuförderers 2 ein Abgabebereich (nicht gezeigt) ausgebildet, in welchem die Objekte 10a-10e an die Förderschalen 102 des Wegförderers 101 übergeben werden.

Die virtuellen Abteile 8a-8e dienen nun dazu, zwecks phasengerechter Anordnung der Objekte 10a-10e zu verfügbaren Förderschalen 102 des Wegförderers 101 im Abgabebereich, einzelne, überzählige Objekte zu markieren, so dass diese durch das Bedienpersonal erkennbar werden und vom Förderorgan entnommen werden können.

Dank der durch die virtuellen Abteile 8a-8e ausgebildeten Entnahmehilfen kann das Bedienpersonal überzählige Objekte 110 schnell und zuverlässig ohne Effizienzeinbusse dem Förderorgan 3 entnehmen. Dies garantiert eine phasengerechte Anordnung der Objekte auf dem Förderorgan 3 im Anschluss an den Aussortierbereich A.

Zur Markierung von überzähligen Objekten 10a-10e berücksichtigt die Steuerungseinheit 7 die Fördergeschwindigkeit und somit die Förderkapazität des Wegförderers 101. Die Fördergeschwindigkeit des Wegförderers 101 kann z. B. über einen Drehzahlgeber 109 einer Antriebswelle des Wegförderers 101 ermittelt werden. Die Messwerte können z.B. über eine Steuerungseinheit 107 des Wegförderers 101 an die Steuerungseinheit 7 übermittelt werden.

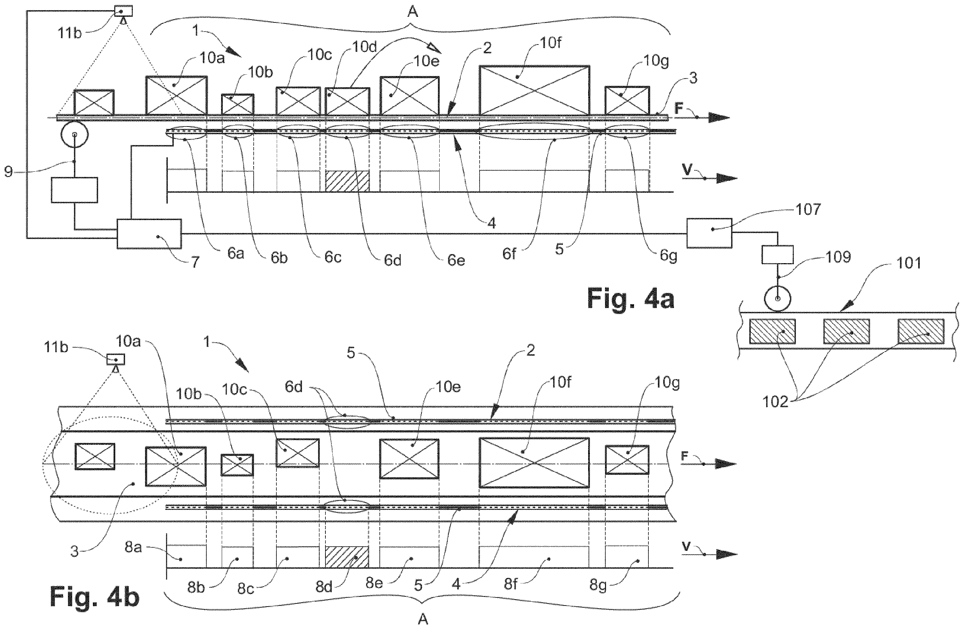

Ferner berücksichtigt die Steuerungseinheit 7 auch die Fördergeschwindigkeit des Zuförderers 2. Die Fördergeschwindigkeit des Zuförderers 2 kann z. B. über einen Drehzahlgeber 9 einer Antriebswelle des Zuförderers 2 ermittelt werden, dessen Messwerte an die Steuerungseinheit 7 übermittelt werden (siehe auch Figur 4a).

Die den zu entfernenden Objekten 110 zugeordneten Leuchtsignale zeichnen sich insbesondere durch eine Warnfarbe, wie z. B. rot aus, so dass diese die Aufmerksamkeit des Bedienpersonals auf sich ziehen.

Gemäss der Ausführungsform nach Figur 3a und 3b ist in Förderrichtung F vor dem Aussortierbereich A eine Lichtschranke 11a angeordnet, mit welcher einerseits jeweils die Position der Objekte 10a-10e entlang der Förderstrecke sowie die Längsausdehnung der Objekte 10a-10e zwischen einer vordersten Objektkante und einer hintersten Objektkante erfasst bzw. ermittelt wird. Die Position und die Längsausdehnung der Objekte 10a-10e wird jeweils mit den virtuellen Abteilen 8a-8e abgeglichen, wobei überzählige Objekte 110, welche nicht in virtuelle Abteile 8a-8e passen, mittel Leuchtsignale 6a-6e entsprechend markiert werden.

Zur Ermittlung der Längsausdehnung der Objekte 10a-10e wird jeweils der Zeitpunkt der Unterbrechung der Lichtschranke 11a sowie vom Ende der Unterbrechung erfasst, womit sich unter Miteinbezug der Fördergeschwindigkeit des Förderorgans 3 die Längsausdehnung der Objekte 10a-10e berechnen lässt.

Die Figuren 4a und 4b zeigen eine ähnliche Anordnung wie in Figur 3a und 3b jedoch mit dem Unterschied, dass in Förderrichtung F vor dem Aussortierbereich A anstelle einer Lichtschranke eine Kamera 11b angeordnet ist, welche dieselbe Aufgabe erfüllt wie die Lichtschranke. Gemäss den Figuren 4a und 4b ist das Objekt 10d vom Förderorgan 3 zu entfernen. Das Objekt 10d wird über das Leuchtsignal 6d entsprechend markiert.

## Patentansprüche

1. **Verfahren** zum Fördern und Abgeben von Objekten (10a-10e) von einem Zuförderer (2, 52) über einen Abgabebereich an einen Wegförderer (101), wobei der Zuförderer (2, 52) ein Förderorgan (3, 53) enthält, welches entlang einer Förderstrecke einen durchgehenden Auflagebereich zum aufliegenden und hintereinander Fördern von Objekten (10a-10e) entlang der Förderstrecke ausbildet, und der Zuförderer (2, 52) einen in Förderrichtung (F) vor dem Abgabebereich angeordneten Eingreifbereich (A, B) zum Transferieren von Objekten (10a-10e) auf das bzw. weg vom Förderorgan (3, 53) ausbildet,
**dadurch gekennzeichnet, dass**
im Eingreifbereich (A, B) eine optische Anzeigeeinheit (4, 54) mit mindestens einem parallel zur Förderrichtung (F) ausgerichteten, ansteuerbaren Lichterband (5, 55) angeordnet ist, wobei mittels einer Steuerungseinheit (7, 57) Leuchtsignale (6a-6e, 56a-56c) am Lichterband (5, 55) erzeugt werden, welche synchron mit dem Förderorgan (3, 53) in Förderrichtung (F) mitbewegt werden, wobei mittels der Leuchtsignale (6a-6e, 56a-56c) virtuelle Abteile (8a-8e, 58a-58c) zum Transferieren von Objekten (10a-10e) auf das bzw. weg vom Förderorgan (3, 53) visualisiert werden.

2. Verfahren nach Anspruch 1, **dadurch gekennzeichnet, dass** die virtuellen Abteile (8a-8e, 58a-58c) so ausgebildet werden, dass die im Eingreifbereich (A, B) in die virtuellen Abteile (8a-8e, 58a-58c) auf dem Zuförderer (2, 52) abgelegten bzw. die sich in den virtuellen Abteilen (8a-8e, 58a-58c) befindlichen Objekte (10a-10e) zwecks Abgabe der Objekte (10a-10e) im Abgabebereich phasengerecht zu verfügbaren Förderplätzen (102) des Wegförderers (101) angeordnet sind.

3. Verfahren nach Anspruch 1 oder 2, **dadurch gekennzeichnet, dass** der Eingreifbereich ein Beschickungsbereich (B) zum Auflegen von Objekten auf das Förderorgan (53) ist, und mittels der Leuchtsignale (56a-56c) virtuelle Abteile (58a-58c) zum Auflegen von Objekten (10a-10e) auf das Förderorgan (53) visualisiert werden.

4. Verfahren nach Anspruch 1 oder 2, **dadurch gekennzeichnet, dass** der Eingreifbereich ein Aussortierbereich (A) zum Entfernen von Objekten (10a-10e) vom Förderorgan ist, wobei mittels der durch Leuchtsignale (6a-6e) visualisierten, virtuellen Abteile (8a-8c) überzählige Objekte (10a-10e) auf dem Förderorgan (3), welche vom Förderorgan (3) zu entfernen sind, markiert werden, so dass die übrigen Objekte (10a-10e) zwecks Abgabe der Objekte (10a-10e) im Abgabebereich phasengerecht zu verfügbaren Förderplätzen (102) des Wegförderers (101) angeordnet sind.

5. Verfahren nach Anspruch 4, **dadurch gekennzeichnet, dass** die Leuchtsignale (6a-6e) jeweils Leuchtstreifen sind, welche am Lichterband (5) jeweils zwischen einer bzw. einem in Förderrichtung (F) vordersten Objektkante bzw. Objektpunkt und einer bzw. einem in Förderrichtung (F) hintersten Objektkante bzw. Objektpunkt ausgebildet werden.

6. Verfahren nach einem der Ansprüche 2 bis 5, **dadurch gekennzeichnet, dass** die Steuerungseinheit (7, 57) die virtuellen Abteile (8a-8e, 58a-58c) zwecks phasengerechter Anordnung der Objekte (10a-10e) zu verfügbaren Förderplätzen (102) des Wegförderers (101) im Abgabebereich in Abhängigkeit von der Fördergeschwindigkeit des Zuförderers (2, 52) und der Fördergeschwindigkeit des Wegförderers (101) mittels Leuchtsignalen (6a-6e, 56a-56c) ausbildet.

7. Verfahren nach einem der Ansprüche 2 bis 6, **dadurch gekennzeichnet, dass** die verfügbaren Förderplätze durch Fördereinheiten (102) des Wegförderers (101) ausgebildet werden.

8. Verfahren nach einem der Ansprüche 1 bis 7, **dadurch gekennzeichnet, dass** die Leuchtsignale (6a-6e, 56a-56c) jeweils Leuchtstreifen sind.

9. Verfahren nach Anspruch 8, **dadurch gekennzeichnet, dass** Leuchtstreifen (6a-6e, 56a-56c) die Längsausdehnung des virtuellen Abteils (8a-8e, 58a-58c) in Förderrichtung (F) visualisieren.

10. Verfahren nach Anspruch 8 oder 9, **dadurch gekennzeichnet, dass** Leuchtstreifen (6a-6e, 56a-56c) die Längsausdehnung der Zwischenräume zwischen den virtuellen Abteilen (58a-58c) in Förderrichtung (F) visualisieren.

11. Verfahren nach einem der Ansprüche 1 bis 10, **dadurch gekennzeichnet, dass** mittels der optischen Anzeigeeinheit (4, 54) virtuelle Abteile (8a-8e, 58a-58c) von unterschiedlicher Längsausdehnung in Förderrichtung (F) und/oder mit unterschiedlichem Abstand zueinander in Förderrichtung (F) visualisiert werden.

12. **Fördersystem** zum Ausführen des Verfahrens gemäss den Ansprüchen 1 bis 11, enthaltend einen Zuförderer (2, 52) mit einem Förderorgan (3, 53), welches entlang einer Förderstrecke einen durchgehenden Auflagebereich zum aufliegenden und hintereinander Fördern von Objekten (10a-10e) entlang der Förderstrecke ausbildet, und einen Wegförderer (101), sowie einen Abgabebereich zum Abgeben von Objekten (10a-10e) vom Zuförderer (2, 52) an den Wegförderer (101), und der Zuförderer (2, 52) einen in Förderrichtung (F) vor dem Abgabebereich angeordneten Eingreifbereich (A, B) zum Transferieren von Objekten (10a-10e) auf das bzw. weg vom Förderorgan (3, 53) ausbildet,
**dadurch gekennzeichnet, dass**
im Eingreifbereich (A, B) eine optische Anzeigeeinheit (4, 54) mit mindestens einem parallel zur Förderrichtung (F) ausgerichteten, ansteuerbaren Lichterband (5, 55) angeordnet ist, wobei mittels einer Steuerungseinheit (7, 57) Leuchtsignale (6a-6e, 56a-56c) am Lichterband (5, 55) erzeugt werden können, welche synchron mit dem Förderorgan (3, 53) in Förderrichtung (F) mitbewegbar sind, wobei mittels der Leuchtsignale (6a-6e, 56a-56c) virtuelle Abteile (8a-8e, 58a-58c) zum Transferieren von Objekten (10a-10e) auf das bzw. weg vom Förderorgan (3, 53) visualisiert werden können.

13. Fördersystem nach Anspruch 12, **dadurch gekennzeichnet, dass** die virtuellen Abteile (8a-8e, 58a-58c) mittels der Steuerungseinheit (7, 57) so ausgebildet werden können, dass die im Eingreifbereich (A, B) in die virtuellen Abteile (8a-8e, 58a-58c) auf dem Zuförderer (2, 52) abgelegten Objekte (10a-10e) bzw. die sich in den virtuellen Abteilen (8a-8e, 58a-58c) auf dem Zuförderer (2, 52) befindlichen Objekte (10a-10e) zwecks Abgabe der Objekte (10a-10e) im Abgabebereich phasengerecht zu verfügbaren Förderplätzen (102) des Wegförderers (101) angeordnet sind.

14. Fördersystem nach Anspruch 12 oder 13, **dadurch gekennzeichnet, dass** der Eingreifbereich ein Beschickungsbereich (B) zum Auflegen von Objekten auf das Förderorgan (53) ist, und die Steuerungseinheit (57) so ausgelegt ist, dass mittels der Leuchtsignale (56a-56c) virtuelle Abteile (58a-58c) zum Auflegen von Objekten (10a-10e) auf das Förderorgan (53) visualisiert werden können.

15. Fördersystem nach Anspruch 12 oder 13, **dadurch gekennzeichnet, dass** der Eingreifbereich ein Aussortierbereich (A) zum Entfernen von Objekten (10a-10e) vom Förderorgan (3) ist, wobei die Steuerungseinheit (7) so ausgelegt ist, dass mittels der durch Leuchtsignale (6a-6e) visualisierten, virtuellen Abteile (8a-8e) überzählige Objekte (10a-10e) auf dem Förderorgan (3), welche vom Förderorgan (3) zu entfernen sind, markiert werden können, so dass die übrigen Objekte (10a-10e) zwecks Abgabe der Objekte (10a-10e) im Abgabebereich phasengerecht zu verfügbaren Förderplätzen (102) des Wegförderers (101) angeordnet sind.

16. Fördersystem nach Anspruch 15, **dadurch gekennzeichnet, dass** in Förderrichtung (F) vor dem Aussortierbereich (A) eine Sensoreinheit (11a, 11b), wie Lichtschranke oder Kamera, zur Ermittlung der Position und der Längenausdehnung der Objekte (10a-10e) auf dem Förderorgan (3) und/oder der Längenausdehnung der Objektzwischenräume parallel zur Förderrichtung (F) vorgesehen ist.

17. Fördersystem nach einem der Ansprüche 14 bis 16, **dadurch gekennzeichnet, dass** die Förderplätze des Wegförderers (101) durch Fördereinheiten (102) des Wegförderers (101) ausgebildet werden.

18. Fördersystem nach einem der Ansprüche 12 bis 17, **dadurch gekennzeichnet, dass** das Fördersystem (1, 51) ein Sortiersystem zur gezielten Verteilung von Objekten (10a-10e) ist.
